Europäisches Patentamt

European Patent Office

Office européen des brevets

(19)

(11) Publication number: **0 008 568**
**B1**

(12) **EUROPEAN PATENT SPECIFICATION**

(45) Date of publication of patent specification: **20.07.83**

(51) Int. Cl.³: **F 24 H 1/28, F 24 H 9/12**

(21) Application number: **79850077.3**

(22) Date of filing: **22.08.79**

(54) A boiler for heating the heat-transfer medium in a heating system.

(30) Priority: **24.08.78 DE 2837004**

(43) Date of publication of application:
**05.03.80 Bulletin 80/5**

(45) Publication of the grant of the patent:
**20.07.83 Bulletin 83/29**

(84) Designated Contracting States:
**AT BE CH DE FR GB IT LU NL SE**

(56) References cited:
**AT - B - 272 588**
**DE - C - 915 030**
**DE - U - 1 909 407**
**DE - U - 1 933 792**
**DE - U - 7 014 691**
**DE - U - 7 606 273**
**FR - A - 1 193 053**
**GB - A - 1 502 746**
**LU - A - 52 606**

(73) Proprietor: **Bernstein, Lennart**
**Appartamento numero 44 El IIWI Guadalmina**
**Alta**
**San Pedro De Alcantara (Marbella) (ES)**

(72) Inventor: **Bernstein, Lennart**
**Appartamento numero 44 El IIWI Guadalmina**
**Alta**
**San Pedro De Alcantara (Marbella) (ES)**

(74) Representative: **Uusitalo, Isak**
**Carminger & Uusitalo Patentbyra AB Kungsgatan**
**38**
**S-111 35 Stockholm (SE)**

Courier Press, Leamington Spa, England

## A boiler for heating the heat-transfer medium in a heating system

The invention relates to a boiler for heating the heat-transfer medium in a heating system, e.g. domestic central-heating system, in which combustion gases are brought into heat-transfer contact with a heat-transfer medium, such as water, over a large specific, heat-transfer surface; in which said gases are cuased to flow downwardly before being discharged to atmosphere; and in which condensate is formed and collected prior to discharge of said gases from the heating system, said boiler comprising a combustion chamber and a heat-transfer medium chamber such as a hot water chamber and said boiler having the form of an upstanding smoke-pipe boiler wherein the smoke pipes extend from the combustion chamber through the heat-transfer medium chamber and discharge into a collecting chamber which is provided with an outlet for the combustion gases and an outlet for condensate from the combustion gases.

Boilers of this general kind are known to the art. For example, LU—A—52606 (PONS) describes a boiler comprising a parallelepipedic casing having an upper and a lower chamber. Arranged in the upper chamber is a combustion chamber and a burner, while adjoining the lower chamber is a collector for combustion gases. Extending vertically between the combustion chamber is a bundle of pipes, through which hot gases are caused to flow downwardly, in counter-flow with the medium being heated.

Further publications which disclose certain relevant features of a boiler of the aforementioned kind include GB—A—1502746; FR—A—1 193 053; DE—U—190947; DE—U—7014691.7; DE—C—915 030 and AT—B—272 588.

All of these known boiler arrangements, however, are encumbered with a number of serious disadvantages.

In the majority of conventional boilers used in domestic hot-water central-heating installations, the fuel — which is predominantly oil or gas — is burned in a combustion chamber which extends along the whole length of the boiler. The chamber comprises a jacket in which the water — or òther medium — to be heated is contained. The maximum efficiency attainable in the case of large oil-fired boilers is 87%, depending upon the nature of the fuel and the size of the boiler. The major part of the losses is represented in the relatively high heat content of the flue gases. According to present day beliefs, because of sooting-up of the chimney or stack, the temperature of the flue gases at the boiler outlet-pipe should not be less than 160°C with the boiler operating in the power-range of said boiler.

For the purpose of utilizing the waste-heat to better effect, the heating surface adjacent the combustion chamber is enlarged by using smoke tubes through which exhaust gases are caused to pass upwardly before entering the chimney. Special measures are required in this respect to prevent sooting of the chimney as a result of condensation on the walls of the chimney due to the lowering of the temperature therein. As a result thereof, only relatively few such boilers with smoke tubes have been used in central-heating systems.

Moreover, with known conventional boilers the hot flue gases still contain a relatively large amount of thermal energy when discharged to atmosphere, which energy is consequently lost for useful purposes.

It is therefore the object of this invention to provide a novel boiler of the aforesaid kind with which the disadvantages inherent with said conventional boilers are at least substantially overcome, and more specifically to provide such a boiler in which more heat is recovered from the hot flue gases than with conventional boilers, before discharging the gases to atmosphere.

To this end it is proposed in accordance with the invention that in a boiler of the kind described in the introduction the heat-transfer medium chamber contains a pipe arrangement for domestic water in which the return line for heat-transfer medium discharges into the heat-transfer medium chamber at such a level vertically above the level of the lower end of the pipe arrangement for domestic water as to create a cold zone of heat-transfer medium between said two levels through the cooling effect caused by the domestic water arrangement on the heat-transfer medium.

In this way there is obtained in the lower region of the boiler a cold zone by means of which the flue gases flowing through the pipes are cooled to a lower temperature than would otherwise be the case, and more energy can be taken from said gases before discharging them to atmosphere.

Conveniently, the distance between the said two levels is between one fourth and one half of the total height of the heat-transfer medium chamber, and preferably the mouth of the return line for heat-transfer medium lies on a level with the pipe arrangement for domestic water at which said water has at least substantially reached the same temperature as the returning heat-transfer medium.

The aforementioned large, specific heat-transfer area may be obtained by dividing the flow of combustion gas into a multiplicity of parallel part-flows separated mechanically from the hot-water. By dividing the gas flow in this way, into a large number of part flows of relatively small cross-sectional area, there is obtained a particularly effective transfer of heat to the heat-transfer medium, whereby — as a result of the counter-flow — an effective temperature gradient between the combustion gases and the heat-transfer medium is ensured along the total smoke-pipe length. The resultant condensate falls gravitionally downwardly through the smoke-pipes and can readily be removed by suction, the combustion gases leaving the boiler at the bottom thereof being maximally free of condensate.

Further, the combustion is suitably caused to take place in a location placed immediately above the heat-transfer area, thereby to enable solid residues of combustion to be moved downwards by the hot combustion gases such as to enable residues to be removed together with the condensate.

In many cases — and particularly in the case of oil burners — the overpressure occurring at the burner, in combination with the suction at the chimney, is sufficient to move the combustion gases downwardly — against their natural inclination to rise upwardly — in counter-flow to the flow of hot-water. When however, it is considered that the natural draught in the chimney, combined with the pressure prevailing in the combustion chamber of the boiler, is not considered sufficient to draw the combustion gases downwardly, a suction fan can be arranged adjacent to or in the combustion gas outlet.

In accordance with one advantageous embodiment of a boiler constructed in accordance with the invention, the combustion chamber is preferably arranged immediately above the upper ends of the smoke-pipes and the lower ends of said pipes discharge into a collecting chamber having an outlet for the combustion gases and a drain for the precipitation from said gases. The collecting chamber may also be provided with an outlet through which solid combustion residues can be removed. The strongly cooled and — as previously mentioned — substantially condensate-free combustion gases pass from the collecting chamber through the outlet to the chimney, from whence they are led to atmosphere.

In the case of oil and/or gas fired boilers, which are — as a rule — operated intermittently, the provision of a suction fan will ensure that the waste gases are removed effectively from the boiler when firing of the boiler is discontinued. In the case of a boiler having an oil-burner, which is always provided with an air-supply fan, the burner may also be provided with a device arranged to operate the fan with a time-lag, said fan causing the combustion gases to be removed effectively from the boiler when the burner flame is extinguished.

The boiler, and particularly the hot-water boiler, according to the invention can be used to produce hot water for domestic use, or to produce any other household medium. In accordance with a particular embodiment of the invention, to this end there is incorporated in the chamber for the heat-transfer medium an arrangement of pipes for the household medium. Suitably, this pipe arrangement comprises an upstanding pipe-helix which completely or partially encloses the smoke pipes in the chamber for the heat-transfer medium, to the lower end of which helix the fresh domestic medium, e.g. water, can be fed. As before mentioned, to promote the creation of a cold zone in the bottom of the heat-transfer medium chamber, the return line for the heat-transfer medium opens out into the chamber for said medium at a certain vertical distance above the lower end of the pipe helix, and preferably at the level at which said domestic medium has reached at least substantially the same temperature as the returning heat-transfer medium. Hereby, the domestic water, which may have a very low temperature, can cool the bottom of the heat-transfer medium chamber to low temperatures and the space below the entrance of the return line will be stably layered.

In accordance with another advantageous embodiment of a smoke-pipe type boiler constructed in accordance with the invention, the chamber for the heat-transfer medium is continued upwardly past the combustion chamber, to form thereabove a space or reservoir which is connected with the combustion chamber in a heat-conductive manner, the pipe-helix for said domestic medium conveniently extending into the reservoir for the heat-transfer medium. By means of this embodiment the specific heat-transfer surface between the combustion gases and the heat-transfer medium is further increased, thereby obviating the necessity of providing special heat-insulation at the top of the combustion chamber and the sides thereof. Instead of a reservoir for the heat-transfer medium, the pipe arrangement for the domestic medium can open out into a reservoir for domestic medium located above the combustion chamber, in which reservoir a relative large amount of domestic medium can be held at the desired temperature.

Two exemplary embodiments of the invention will now be described in more detail with reference to the accompanying schematic drawings, in which

Figure 1 illustrates one embodiment of a hot-water boiler constructed in accordance with the invention.

Figure 2 is a horizontal sectional view of the boiler, taken on a level with the combustion chamber to illustrate the distribution of the smoke-pipes, and

Figure 3 is a modified embodiment of the hot-water boiler according to the invention for installation in spaces of low "ceiling" height.

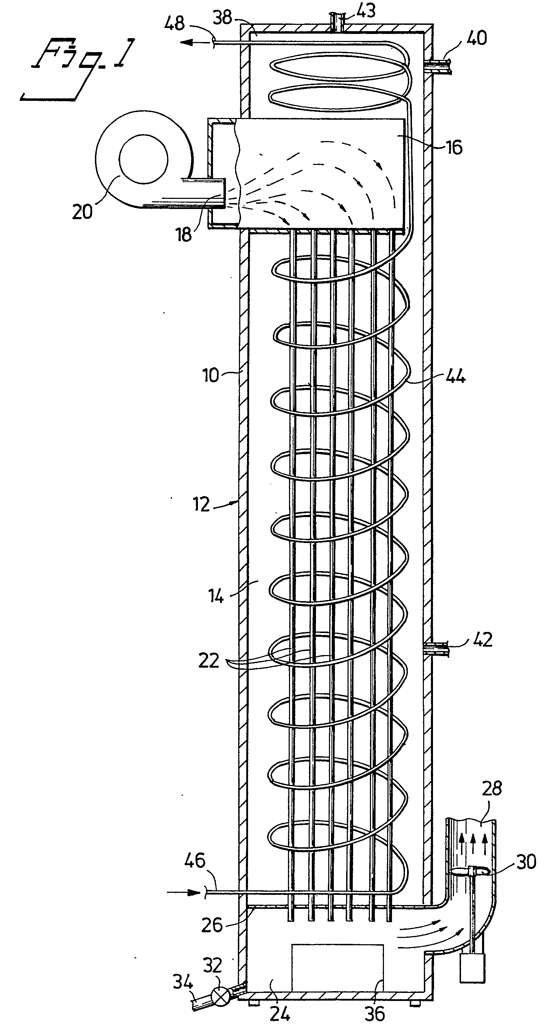

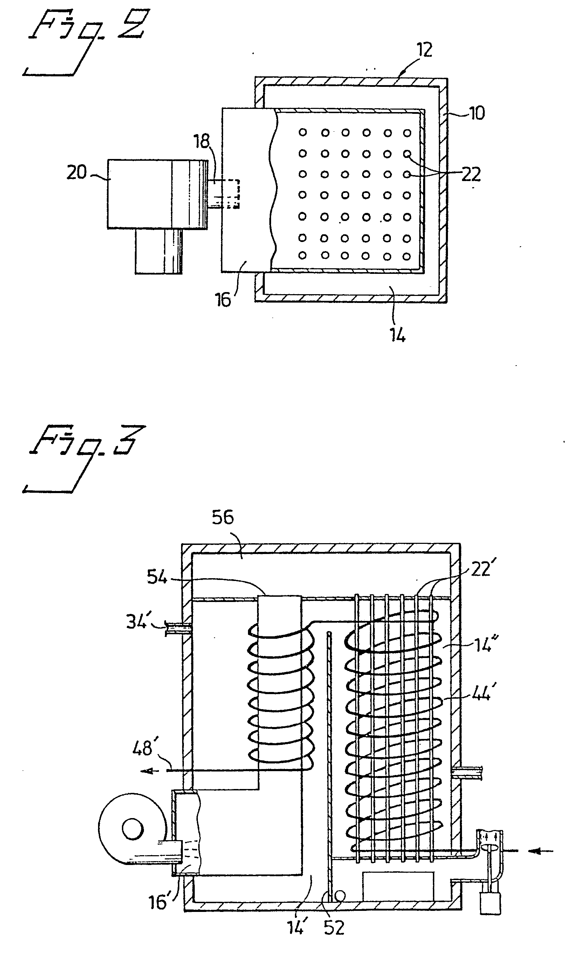

The hot-water boiler illustrated in Figures 1 and 2 is an oil-fired boiler comprising a boiler casing 12 having an outer insulation 10, said casing 12 enclosing a chamber 14 for a heat-transfer medium, which in the illustrated case is water. A combustion chamber 16 whose width is less than that of the casing 12 is arranged in the upper part of the casing and has an end part

which projects outwardly of said casing and which houses a conventional burner 18 having a fan 20 for the combustion air. Extending downwardly from the bottom of the combustion chamber 16 and in open communication therewith and distributed evenly around said bottom, is a number of smoke-pipes 22 which pass through the hot-water chamber 14 to a collecting chamber 24 located at the lower end of the boiler casing 12, said collecting chamber being separated from the hot-water chamber 14 by a transverse wall 26.

An upwardly extending exhaust pipe 28 leads to a chimney (not shown); in the illustrated case the exhaust pipe 28 is provided with an electrically operated suction fan 30 which sucks the combustion gases from the combustion chamber 16 through the smoke-pipes 22 and the collecting chamber 24 and forces them into the atmosphere, through said chimney.

Located at the deepest part of the collecting chamber 24 is an outlet 34 provided with a valve 32, said outlet being intended for the draining of condensate precipitated in the smoke-pipes 22, such as sulphuric acid, which condensate is able to collect on the bottom of the chamber 24, from whence it can be removed by periodically opening the valve 32. Condensation residues and any combustion residues not removed through the outlet 34 can be removed through an opening 36 which is preferably arranged in one side wall of the collection chamber 24 and which is normally closed by means of a removable cover, direct access being had to said chamber by removing said cover.

As will be seen from Figure 1, that part of the hot-water chamber 14 located above the combustion chamber 16 forms a hot-water reservoir 38 which is connected to the infeed line of the heating system through an outlet 40. The return line of said system is connected with the hot-water chamber 14 through an inlet 42 which is located at a considerable vertical distance above the transverse wall 26. A connecting line 43 leads to an expansion vessel, not shown.

Extending through the entire hot-water chamber 14 and chamber 38 is a helical pipe 44 intended for heating domestic water. The water is passed to the helical pipe 44 from a fresh-water line at 46 and is passed to the consumer at 48. In the lower region of the hot-water chamber 14, the helically-wound pipe 44 encircles the smoke-pipes 22 and is so dimensioned that the fresh water passed to the lower end of the helical pipe is heated to the desired temperature during its passage therethrough. In this case, the inlet for hot water returning from the water-heating system should be placed at a level such that water located in the helical pipe 44 at said level has been heated to at least substantially the temperature of the returning water.

The space above the combustion chamber 16 can be formed in a conventional manner as a reservoir for domestic water instead of the hot-water chamber 38. The domestic water reservoir is separated from the hot-water chamber 14 by a corresponding transverse wall within the boiler casing 12.

Figure 3 shows a modified hot-water boiler for installation in a space of low "ceiling" height. In the boiler of the Figure 3 embodiment the combustion chamber 16' and the smoke-pipes 22' are arranged by the side of each other and a separate smoke intermediate-chamber is arranged above the hot-water chamber, said chamber being divided into two sections 14' and 14" by a partition wall 52. The gases from the combustion chamber 16' are first led upwardly through a single combustion chamber pipe 54 of relatively large cross-sectional area, to an intermediate chamber 56. The partition wall terminates at a distance beneath the intermediate chamber 56 to provide an open communication between the two hot-water chambers 14' and 14", of which chambers the one shown on the left of the drawing forms a reservoir for hot water heated by the smoke pipes 22', from which reservoir hot water is passed to the water-heating system via an outlet 34' arranged at the upper end of the boiler.

A helically wound pipe 44' is provided for domestic water, said pipe extending from the hot-water chamber 14', while encircling the combustion-chamber pipe 54, to an outlet 48' for the heated domestic water. The boiler of the Figure 3 embodiment is similar in all other respects to the boiler of the Figures 1 and 2 embodiment.

**Claims**

1. A boiler for heating a heat-transfer medium in a heating system, such as a domestic boiler, in which combustion gases are brought into heat-transfer contact with a heat-transfer medium, such as water, over a large specific, heat-transfer surface; in which said gases are caused to flow downwardly before being discharged to atmosphere; and in which condensate is formed and collected prior to discharge of said gases from the heating system, said boiler comprising a combustion chamber (16) and a heat-transfer medium chamber (14) such as a hot water chamber and said boiler having the form of an upstanding smoke-pipe boiler wherein the smoke pipes (22) extend from the combustion chamber (16) through the heat-transfer medium chamber (14) and discharge into a collecting chamber (24) which is provided with an outlet (28) for the combustion gases and an outlet (34) for condensate from the combustion gases, characterized in that the heat-transfer medium chamber (14) contains a pipe arrangement (44) for domestic water in which the return line (42) for heat-transfer medium discharges into the heat-transfer medium chamber (14) at such a level vertically above the level of the lower end of the pipe arrangement (44) for domestic water as to create a cold zone of heat-transfer medium between said two levels through the cooling effect caused by the domestic water arrangement on the heat-transfer medium.

2. A boiler according to Claim 1, characterized in that the distance between said two levels is between one fourth and a half of the total height of the heat-transfer medium chamber.

3. A boiler according to Claim 1 or 2, characterized in that the mouth (42) of the heat-transfer medium return line lies on a level with the pipe arrangement (44) for domestic water in which the domestic water has at least substantially reached the same temperature as the returning heat-transfer medium.

4. A boiler according to any of Claims 1—3, characterized in that said boiler is fired by oil and/or gas, wherein the combustion chamber (16) is arranged immediately above one end of the smoke-pipes (22).

5. A boiler according to any of Claims 1—4, characterized in that the collecting chamber (24) is provided with an opening (36) through which solid combustion residues can be removed from said boiler.

6. A boiler according to any of Claims 1—5, characterized in that the outlet (28) for combustion gases is provided with a suction fan (30).

7. A boiler according to Claim 1, characterized in that said boiler is oil fired while using an intermittently energizable oil burner provided with a venting fan, wherein said fan is provided with a device for operating the same with a time-lag.

8. A boiler according to any of Claims 1—7, characterized in that the heat-transfer medium chamber (14) continues upwardly past the combustion chamber (16) and forms thereabove a space (38) which is in heat-conductive connection with the combustion chamber (16).

9. A boiler according to Claim 8, characterized in that said pipe arrangement (44) for domestic water extends into said space (38).

10. A boiler according to any of Claims 1—9, characterized in that the pipe arrangement (44) for domestic water discharges into a domestic-water reservoir (not shown) located above the combustion chamber.

11. A boiler according to any of the preceding claims characterized in that said pipe arrangement (44) for domestic water comprises a helically wound pipe.

12. A boiler according to any of the preceding claims characterized in that the outlet (48) for the domestic water pipe arrangement (44) lies above the level of the mouth (42) of the heat-transfer medium return line.

## Revendications

1. Chaudière pour chauffer un fluide caloporteur dans un système de chauffage, telle qu'une chaudière domestique, dans laquelle les gaz de combustion sont amenés en contact d'échange de chaleur avec un fluide de transmission de chaleur, tel que de l'eau, sur une grande surface spécifique d'échange de chaleur; dans laquelle ces gaz sont dirigés suivant un courant descendant avant d'être évacués à l'atmosphère; et dans laquelle les condensats sont formés et collectés avant l'évacuation desdits gaz du système de chauffage, cette chaudière comprenant une chambre de combustion (16) et une chambre de fluide de transmission de chaleur (14) telle qu'une chambre à eau chaude, et cette chaudière ayant la forme d'une chaudière verticale à conduits de fumée dans laquelle les conduits de fumée (22) partent de la chambre de combustion (16), traversent la chambre (14) de fluide de transmission de chaleur et débouchent dans une chambre de collecte (24) qui comporte une sortie (28) pour les gaz de combustion et une sortie (34) pour les condensats provenant des gaz de combustion, laquelle chaudière est caractérisée en ce que la chambre (14) de fluide de transmission de chaleur contient un dispositif tubulaire (44) pour l'eau à usage domestique, dans lequel la conduite de retour (42) du fluide de transmission de chaleur débouche dans la chambre (14) de fluide de transmission de chaleur à un niveau situé verticalement au-dessus du niveau de l'extrémité inférieure du dispositif tubulaire (44) pout l'eau domestique, de façon à créer une zone froide de fluide de transmission de chaleur entre ces deux niveaux, par l'effet de refroidissement provoqué par le dispositif pour l'eau domestique sur le fluide de transmission de chaleau.

2. Chaudière suivant la revendication 1, caractérisée en ce que la distance entre les deux niveaux est comprise entre le quart et la moitié de la hauteur totale de la chambre de fluide de transmission de chaleur.

3. Chaudière suivant la revendication 1 ou 2, caractérisée en ce que la sortie (42) de la conduite de retour de fluide de transmission de chaleur se trouve au niveau du dispositif tubulaire (44) pour l'eau domestique auquel l'eau domestique a atteint au moins sensiblement la même température que le fluide de transmission de chaleur en retour.

4. Chaudière suivant l'une quelconque des revendications 1 à 3, caractérisée en ce que cette chaudière est chauffée avec un combustible liquide et/ou un gaz, la chambre de combustion (16) étant disposée immédiatement au-dessus de l'une des extrémités des conduits de fumée (22).

5. Chaudière suivant l'une quelconque des revendications 1 à 4 caractérisée en ce que la chambre de collecte (24) comporte une ouverture (36) par laquelle les résidus de combustion solides peuvent être évacués de la chaudière.

6. Chaudière suivant l'une quelconque des revendications 1 à 5, caractérisée en ce que la sortie (28) pour les gaz de combustion est équipée d'un ventilateur d'aspiration (30).

7. Chaudière suivant la revendication 1, caractérisée en ce qu'elle est chauffée avec un combustible liquide en utilisant un brûleur à combustible liquide à fonctionnement intermittent équipé d'un ventilateur d'admission, ce ventilateur comportant un dispositif de commande avec temporisation.

8. Chaudière suivant l'une quelconque des revendications 1 à 7, caractérisée en ce que la chambre (14) de fluide de transmission de chaleur se prolonge vers le haut au-delà de la chambre de combustion (16) et forme au-dessus de cette dernière un espace (38) qui est en relation de conduction de chaleur avec la chambre de combustion (16).

9. Chaudière suivant la revendication 8, caractérisée en ce que l'agencement de tubes (44) pour l'eau domestique s'étend dans ledit espace (38).

10. Chaudière suivant l'une quelconque des revendications 1 à 9, caractérisée en ce que le dispositif tubulaire (44) pour l'eau domestique débouche dans un réservoir d'eau domestique (non représenté) situé au-dessus de la chambre de combustion.

11. Chaudière suivant l'une quelconque des revendications précédentes, caractérisée en ce que ledit dispositif tubulaire (44) pour l'eau domestique comprend un tube enroulé hélicoïdalement.

12. Chaudière suivant l'une quelconque des revendications précédentes, caractérisée en ce que la sortie (48) pour le dispositif tubulaire (44) pour l'eau domestique est située au-dessus du niveau de l'orifice de sortie (42) de la conduite de retour du fluide de transmission de chaleur.

Patentansprüche

1. Kessel zum Aufheizen eines Wärmetransportmittels in einem Heizsystem, beispielsweise ein Haushalts-Kessel, in welchem Verbrennungsgase mit einem Wärme-Obertragungsmedium, z.B. Wasser, über eine große spezifische Wärmeübertragungsfläche in Wärmeübertragungskontakt gebracht werden; in welchem diese Gase nach unten strömen gelassen werden, bevor sie in die Atmosphäre abgeleitet werden; und in welchem Kondensat gebildet und gesammelt wird vor der Ableitung der Gase aus dem Heizsystem, wobei der Kessel eine Verbrennungskammer (16) und eine Kammer (14) für das Wärmeübertragungsmedium, beispielsweise eine Heißwasserkammer, umfaßt, und die Form eines stehenden Rauchrohrkessels aufweist, bei dem sich die Rauchrohre (22) von der Verbrennungskammer (16) durch die Kammer (14) für das Wärmeübertragungsmedium erstrecken und in eine Sammelkammer (24) münden, welche einen Auslaß (28) für die Verbrennungsgase und einen Auslaß (34) für das Kondensat aus den Verbrennungsgasen aufweist, dadurch gekennzeichnet, daß die Kammer (14) für das Wärmeübertragungsmedium eine Röhrenanordnung (44) für Brauchwasser enthält, wobei die Rücklaufleitung (42) für das Wärmeübertragungsmedium in die Kammer (14) für das Wärmeübertragungsmedium auf einem Niveau so weit vertikal oberhalb des Niveaus des unteren Endes der Röhrenanordnung (44) für das Brauchwasser mündet, daß durch den Kühleffekt der Brauchwasseranordnung auf das Wärmeübertragungsmedium zwischen den beiden genannten Niveaus ein kalter Bereich des Wärmeübertragungsmediums verursacht wird.

2. Kessel nach Anspruch 1, dadurch gekennzeichnet, daß der Abstand zwischen den beiden erwähnten Niveaus zwischen einem Vierteil und der Hälfte der gesamten Höhe der Kammer für das Wärmeübertragungsmedium beträgt.

3. Kessel nach Anspruch 1 oder 2, dadurch gekennzeichnet, daß die Mündung (42) der Rücklaufleitung des Wärmeübertragungsmediums relativ zur Röhrenanordnung (44) für Brauchwasser auf einem Niveau liegt, auf dem das Brauchwasser wenigstens im wesentlichen die gleiche Temperatur erreicht hat wie das rücklaufende Wärmeübertragungsmedium.

4. Kessel nach einem der Ansprüche 1 bis 3, dadurch gekennzeichnet, daß der Kessel durch Öl und/oder Gas beheizt wird und die Verbrennungskammer (16) oberhalb eines Endes der Rauchrohre (22) angeordnet ist.

5. Kessel nach einem der Ansprüche 1 bis 4, dadurch gekennzeichnet, daß die Sammelkammer (24) mit einer Öffnung (36) versehen ist, durch welche feste Verbrennungsrückstände aus dem erwähnten Kessel entfernbar sind.

6. Kessel nach einem der Ansprüche 1 bis 5, dadurch gekennzeichnet, daß der Auslaß (28) für die Verbrennungsgase mit einem Sauglüfter (30) versehen ist.

7. Kessel nach Anspruch 1, dadurch gekennzeichnet, daß der Kessel ölbefeuert ist, wobei ein intermittierend arbeitender Ölbrenner mit einem Ventilator für die Luftzuführung vorgesehen ist und dieser mit einer Einrichtung versehen ist, die seinen zeitverschobenen Betrieb gestattet.

8. Kessel nach einem der Ansprüche 1 bis 7, dadurch gekennzeichnet, daß sich die Kammer (14) für das Wärmeübertragungsmedium nach oben an der Verbrennungskammer (16) vorbei erstreckt und oberhalb derselben einen Raum (38) bildet, der mit der Verbrennungskammer (16) in wärmeleitender Verbindung steht.

9. Kessel nach Anspruch 8, dadurch gekennzeichnet, daß die Röhrenanordnung (44) für Brauchwasser sich in den erwähnten Raum (38) erstreckt.

10. Kessel nach einem der Ansprüche 1 bis 9, dadurch gekennzeichnet, daß die Röhrenanordnung (44) für Brauchwasser in ein (nicht dargestelltes) Brauchwasser-reservoir mündet, das oberhalb der Verbrennungskammer angeordnet ist.

11. Kessel nach einem der vorhergehenden Ansprüche, dadurch gekennzeichnet, daß die Röhrenanordnung (44) für Brauchwasser ein gewendeltes Rohr umfaßt.

12. Kessel nach einem der vorhergehenden Ansprüche, dadurch gekennzeichnet, daß der Auslaß (48) für die Brauchwasser-Röhrenanordnung (44) oberhalb des Niveaus der Mündung (42) der Rücklaufleitung des Wärmeübertragungsmediums liegt.

Fig.1

**Fig. 2**

**Fig. 3**